# EUROPEAN PATENT APPLICATION

(11) **EP 1 837 538 A2**
(43) Date of publication of application: **26.09.2007**
(21) Application number: 07104489.5
(22) Date of filing: 20.03.2007
(51) Int. Cl.: F16C 23/04

(54) **Spherical plain bearing and a housing in combination with a spherical plain bearing**

(30) Priority: 21.03.2006 US 784160 P
(71) Applicant: Roller Bearing Company of America, Inc., Oxford CT 06478 (US)
(72) Inventor: Tschopp, Ruedi, 2802 Develier (CH); Charmillot, Philippe, 2832 Rebeuvelier (CH)
(74) Representative: Schwabe - Sandmair - Marx

(57) **Abstract**

In a spherical plain bearing (30), an outer ring (34) has a length and an outer periphery defining a first shoulder (36) located at one end along the length and a second shoulder (38) located at a second end along the length. The second end is generally opposite the first end with the first and second shoulders (36,38) being sized to pressingly engage a housing wall. The housing wall defines a bore (40) into which the spherical plain bearing (30) is positioned. The outer periphery of the outer ring (34) further defines a first staking lip (44) extending radially outwardly from the outer periphery at a first distal end thereof and a second staking lip (46) extending radially outwardly from the outer periphery at a second distal end thereof generally opposite the first distal end.

## Description

### Field of the Invention

The present invention relates generally to spherical plain bearings and is more particularly directed to a spherical plain bearing employing shoulders for pressingly engaging a housing and staking lips to retain the bearing in position within the housing.

### Background of the Invention

Spherical plain bearings have spherical contact surfaces which permit the inner ring to rotate freely in all directions within the bearing and application design constraints. This allows these bearings to self align, which means for example, to adjust automatically to misalignment stemming from inaccurate machining, frame distortions from welding, or deformations due to the imposition of static and dynamic forces. Such misalignment would generate considerable end loading and cause early failure of plain cylindrical sleeve bearings.

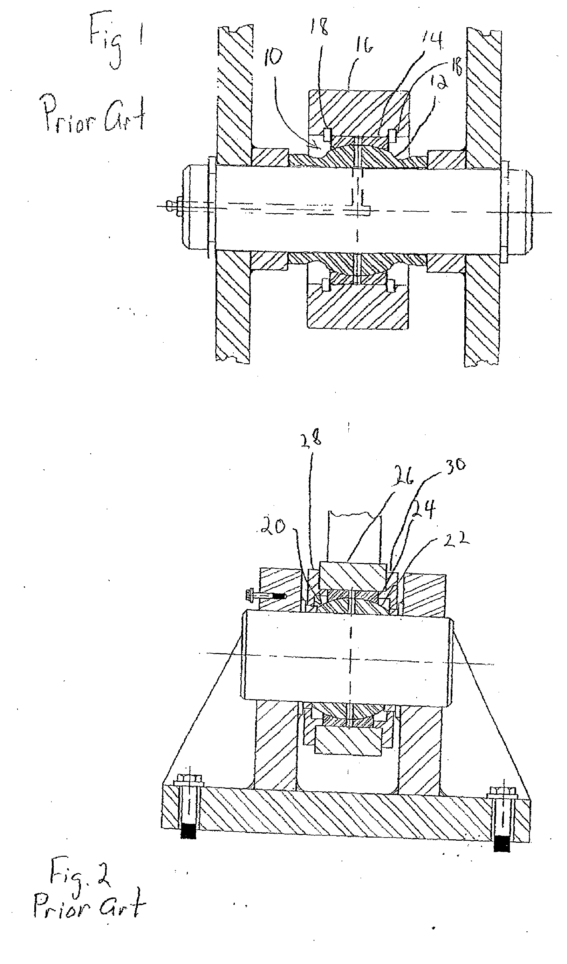

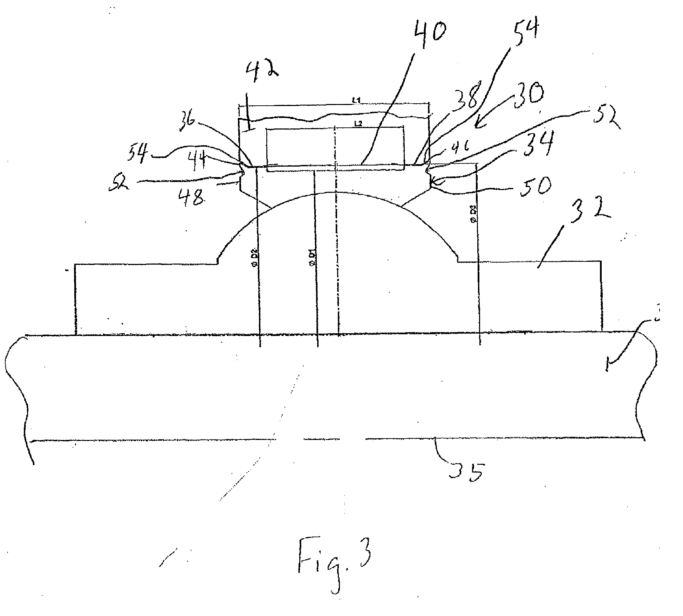

FIGS. 1 and 2 illustrate two prior art spherical plain bearing assemblies. FIG. 1 illustrates a tie rod assembly for a log skidder wherein a spherical plain bearing generally designated by the reference number 10 includes an inner ring 12 and an outer ring 14 positioned in a housing 14. A pair of retaining rings 18 is employed to retain the outer ring 14 in position in the housing 12. The outer ring 14 is in pressing engagement with the bore wall of the housing substantially along the entire length of the outer ring.

FIG. 2 illustrates a hinge pin assembly for a haul truck. This assembly is located between the bed and the frame of the haul truck and includes a spherical plain bearing 20 having an inner ring 22 and an outer ring 24. As with the assembly of FIG. 1, the outer ring 24 pressingly engages the inner ring 22 substantially along the entire length of the housing. In addition, the outer ring 24 and the housing 26 are retained in position by spacer members 28 and 30.

A difficulty encountered with prior art assemblies of this type is that when it is necessary to replace the spherical plain bearing, the housing and other components also must be replaced. Accordingly, there is a present need for a spherical plain bearing and spherical plain bearing/housing assembly whereby when the spherical plain bearing needs to be replaced, it is not requisite that any other components be replaced.

Based on the foregoing, it is the general object of the present invention to provide a spherical plain bearing and a spherical plain bearing and housing assembly that overcomes or improves upon the problems and drawbacks of the prior art.

### Summary of the Invention

The present invention is directed in one aspect to a spherical plain bearing that includes an inner ring and an outer ring. The outer ring has a length and an outer periphery that defines a first shoulder located at one end of the outer ring and a second shoulder located at a second end of the outer ring generally opposite the first end. The first and second shoulders are sized to pressingly engage a housing wall that defines a bore into which the spherical plain bearing is positioned.

In the preferred embodiment of the present invention, the outer periphery defines a first staking lip extending radially outwardly from the outer periphery at a first distal end thereof. A second staking lip also extends radially outwardly from the outer periphery at a second distal end of the outer ring generally opposite the first distal end.

The present invention also resides in a spherical plain bearing and housing wherein the above-described spherical plain bearing is employed and positioned in the housing. The housing includes a bore extending at least part-way through the housing and defined by a bore wall. The bore wall has a first distal end defining a first staking feature and a second distal end generally opposite the first distal end. The second distal end defines a second staking feature. The spherical plain bearing is positioned in the bore so that the first and second shoulders pressingly engage the bore wall and the first staking lip is positioned adjacent the first staking feature and the second staking lip is positioned adjacent the second staking feature. To further secure the spherical plain bearing of the present invention, the first staking lip is moved into contact with the first staking feature and the second staking lip is brought into contact with the second staking feature thereby retaining the spherical plain bearing within the bore.

### Brief Description of the Drawings

FIG. 1 is a partial cross-sectional view of a prior art tie rod assembly used in a log skidder, employing a spherical plain bearing.
FIG. 2 is a partial cross-sectional view of a prior art hinge pin assembly for a haul truck, employing a spherical plain bearing.
FIG. 3 is a partial cross-sectional view of a spherical plain bearing and housing in accordance with the present invention.

### Detailed Description of the Preferred Embodiment

As shown in FIG. 3 a spherical plain bearing and housing assembly generally designated by the reference number 30 includes an inner ring 32 and an outer ring 34 that are symmetrical about center line 35. A shaft member 36 is shown extending through the spherical plain bearing 30 for illustrative purposes only and can constitute any number of different components, such as, but not limited to a tie rod or hinge pin. The outer ring 34 includes first and second shoulder portions, 36 and 38 respectively, that pressingly engage a bore wall 40 defined by a housing 42. The first and second shoulders, 36 and 38, respectively, are each defined by the diameters D2 and D3 respectively. In the illustrated embodiment, the diameters D2 and D3 are substantially equal, however, the present invention is not limited in this regard as the diameters D2 and D3 can be different without departing from the broader aspects of the present invention. Extending between the first and second shoulders, 36 and 38 respectively, is a portion of the outer ring 34 defined by a diameter D1. Diameter D1 is smaller than diameters D2 and D3 thereby causing only the first and second shoulders,36 and 38 respectively, to be in contact with the bore wall 40.

In the illustrated embodiment, the length of the outer ring 34 is defined by L1 and the distances between the first shoulder 36 and the second shoulder 38 is defined by L2. As shown, the length of the first and second shoulders, 36 and 38 respectively, is approximately equal and thereby defined by the equation (L1-L2)/2. However, the present invention is not limited in this regard as the first and second shoulders, 36 and 38, respectively, can be of differing lengths without departing from the broader aspects of the present invention.

The outer ring 34 also defines first and second staking lips, 44, and 46 respectively, located at generally opposite distal ends of the outer ring. In the illustrated embodiment, the outer ring 34 further defines first and second facing surfaces, 48 and 50 respectively, that each define a circumferential groove 52 that in part defines the first and second staking lips. In the illustrated embodiment, the circumferential grooves 52 are "V" shaped; however, the present invention is not limited in this regard.

The housing 42, defines a pair of relieved surfaces 54 of a complimentary shape to the first and second staking lips, 44 and 46. Upon assembly of the spherical plain bearing 30 into the housing 42, the first and second staking lips, 44 and 46, are bent or moved into contact with the relieved surfaces 54, thereby releasably retaining the outer ring 34 in position relative to the housing 42. In the illustrated embodiment, the relieved surfaces 54 are shown in the form of chamfers, however, the present invention is not limited in this regard as such staking features can be of any practical shape that is complimentary to the shape of the above-described staking lips.

Although this invention has been shown and described with respect to the detailed embodiments thereof, it will be understood by those of skill in the art that various changes may be made and equivalents may be substituted for elements and steps thereof without departing from the scope of the invention. In addition, modifications may be made to adapt a particular situation to the teachings of the invention without departing from the essential scope thereof. Therefore, it is intended that the invention not be limited to the particular embodiments disclosed in the above detailed description, but that the invention will include all embodiments falling within the scope of the above description.

## Claims

1. A spherical plain bearing comprising:
an inner ring;
an outer ring, said outer ring having a length and an outer periphery defining a first shoulder located at one end along said length and a second shoulder located at a second end along said length, said second end being generally opposite said first end, said first and second shoulders being sized to pressingly engage a housing wall, said housing wall defining a bore into which said spherical plain bearing is positioned;
said outer periphery further defining a first staking lip extending radially outwardly from said outer periphery at a first distal end thereof and a second staking lip extending radially outwardly from said outer periphery at a second distal end thereof generally opposite said first distal end.

2. A spherical plain bearing as defined by claim 1 wherein:
said outer ring defines a first face surface and a second face surface generally opposite and substantially parallel to said first face surface;
said first face surface defines a first circumferential groove that at least partially defines said first staking lip; and
said second face surface defines a second circumferential groove that at least partially defines said second staking lip.

3. A spherical plain bearing as defined by claim 1 wherein said inner ring is extended.

4. A spherical plain bearing as defined by claim 1 wherein said first shoulder defines a first length and said second shoulder defines a second length, said first and second lengths being substantially equal.

5. A spherical plain bearing as defined by claim 4 wherein said length of said outer ring is defined by L1 and a distance between said first and second shoulders is defined by L2; and wherein
said first and second shoulder lengths, respectively are each defined by, (L1-L2)/2.

6. A spherical plain bearing as defined by claim 1 wherein:
a first diameter defined by said first shoulder is substantially equal to a second diameter defined by said second shoulder.

7. A spherical plain bearing as defined by claim 2 wherein said first and second grooves are "V" shaped.

8. A spherical plain bearing and housing comprising:
a spherical plain bearing including:
an inner ring;
an outer ring, said outer ring having a length and an outer periphery defining a first shoulder located at one end along said length and a second shoulder located at a second end along said length, said second end being generally opposite said first end;
said outer periphery further defining a first staking lip extending radially outwardly from said outer periphery at a first distal end thereof and a second staking lip extending radially outwardly from said outer periphery at a second distal end thereof generally opposite said first distal end;
a housing comprising:
a bore extending at least part-way through the housing, said bore being defined by a bore wall;
said bore wall having a first distal end defining a first staking feature and a second distal end generally opposite said first distal end, said second distal end defining a second staking feature; and wherein
said spherical plain bearing is positioned in said bore so that said first and second shoulders pressingly engage said bore wall and said first staking lip is positioned adjacent said first staking feature and said second staking lip is positioned adjacent said second staking feature so that upon assembly of said spherical plain bearing and said housing, said first staking lip is moved into contact with said first staking feature and said second staking lip is brought into contact with said second staking feature thereby retaining said spherical plain bearing within said bore.

9. A spherical plain bearing and housing as defined by claim 8 wherein:
said first and second staking features are chamfers; and
a mating surface defined by each of said first and second staking lips is complementarily shaped relative to said first and second chamfers.

10. A spherical plain bearing as defined by claim 8 wherein said first shoulder defines a first length and said second shoulder defines a second length, said first and second lengths being substantially equal.

11. A spherical plain bearing as defined by claim 10 wherein said length of said outer ring is defined by L1 and a distance between said first and second shoulders is defined by L2; and wherein
said first and second shoulder lengths, LS1 and LS2 respectively are each defined by (L1-L2)/2.

12. A spherical plain bearing as defined by claim 8 wherein:
a first diameter defined by said first shoulder is substantially equal to a second diameter defined by said second shoulder.

13. A spherical plain bearing as defined by claim 8 wherein:
said outer ring defines a first face surface and a second face surface generally opposite and substantially parallel to said first face surface;
said first face surface defines a first circumferential groove that at least partially defines said first staking lip; and
said second face surface defines a second circumferential groove that at least partially defines said second staking lip.

14. A spherical plain bearing as defined by claim 13 wherein said first and second grooves are "V" shaped.
